# EUROPEAN PATENT SPECIFICATION

(11) **EP 1 381 285 B1**
(45) Date of publication and mention of the grant of the patent: **21.09.2005**
(21) Application number: 02717030.7
(22) Date of filing: 08.04.2002
(51) Int. Cl.: A23K 1/16, A23K 1/00, A23K 1/18

(54) **A RUMEN BYPASS COMPOSITION CONTAINING A BIOACTIVE SUBSTANCE AND A METHOD FOR ITS PREPARATION**
PANSENDURCHTRETENDE ZUSAMMENSETZUNG ENTHALTEND EINE BIOAKTIVE SUBSTANZ UND VERFAHREN ZU IHRER HERSTELLUNG
COMPOSITION SOUSTRAITE A LA DEGRADATION RUMINALE CONTENANT UNE SUBSTANCE BIO-ACTIVE ET PROCEDE DE PREPARATION ASSOCIE

(30) Priority: 16.04.2001 IN DE00000489
(43) Date of publication of application: 21.01.2004
(73) Proprietor: Jubilant Organosys Limited, Uttar Pradesh (IN)
(72) Inventor: NANDA, Nagesh, Race Course, Baroda (IN); DESHPANDE, Pramodini, Taluka Savli, Baroda-391520 (IN)
(74) Representative: Jacob, Reuben Ellis
(86) International application number: PCT/IN2002/000106
(87) International publication number: WO 2002/082921

(56) References cited:
- WO-A-94/14335
- WO-A-96/08168
- GB-A- 1 161 970
- US-A- 4 948 589
- US-A- 5 190 775
- US-A- 6 013 286

## Description

The present invention relates to rumen by-pass products useful as a supplement to or a component of a ruminant feed to increase the absorption of nutrient and to protect medicaments or diagnostic agents during their passage through the rumen. The invention also includes a method of administering the product to ruminants. This invention particularly relates to a method for providing aqueous choline chloride, to a ruminant in a form, which prevents its release into the rumen. More particularly, the present invention relates to a granular composition for a ruminant in which aqueous choline chloride usually fed with an animal feed, is protected from, *inter alia*, the action of microorganisms and rumen juices present in a rumen of a ruminant and is digested and absorbed in an abomasum and downstream thereof.

### Background invention:

It has become a normal practice to use certain feed additives to increase the feeding efficiencies of animal. Diets are supplemented with materials like amino acids, vitamins, hormones, proteins drugs etc. in feeding monogastrics, but these can not be efficiently utilize in case of ruminants as the bioactive substances are destroyed in the rumen.

The expression "biologically active substances" is well understood in the art and includes substances normally susceptible to chemical reactions in the presence of the rumen content and/or rumen microflora or influencing said microflora. This class of substances includes ruminant nutrients that may be used individually or in any desired combination. The biologically active substances can be a carbohydrate, aminoacids or a fat.

The expression "biologically active substances" also includes medicaments or diagnostic agents such as antibiotics, sulphonamides, anti-helmintics and X-ray contrast media.

It is well known that ruminants are able to digest and utilise certain nutrients such as cellulosic substances, which would otherwise be completely or partly undigested because the nutrients are first subjected to microbial treatment in the rumen which brings about a conversion to a digestible form. Unfortunately, such conversion in the rumen is not always restricted to the undigestible substances like cellulose but also occurs with substances, which it would have been desirable to let pass unchanged through the rumen. Thus, when physiologically active or bioactive substances like amino acids vitamins, or proteins are orally fed, the microorganisms in the rumen act on such bioactive substance to decompose them as a result of which their physiological activities are lost rendering them incapable of being utilized by the animal.

There are several teachings in the prior art which to a large extent and varying degrees solve the above-mentioned problems by providing rumen bypass compositions which do not get solubilised in the rumen but are absorbed in the abomasum and further down.

Several patents describe bioactive substance, which are coated so that they are unaltered in the rumen but degrade in the abomasum. For instance, U.S. Patent No. 4,713,245 describes a method of coating the core material with a hydrophobic coating material consisting of higher fatty acids, waxes, animal fat, and vegetable fat with melting point of 40°C or higher by spray coating the core material with the coating material.

Another patent, U.S. Patent No. 4,832,967 describes spray coating the bioactive substance with a pH sensitive coating material first and then with a hydrophobic coating material. In particular, this patent discloses a two-layer rumen surviving coating for water-soluble bioactive substances. The resulting particulate is stable at pH at least as high as 5.5, and releases bioactive substance at pH of 3.5 or less. The coating medium comprises a first coating layer consisting of material sensitive to pH variations and a second coating layer consisting of a hydrophobic composition which must include inorganic filler if the bioactive core has not undergone a surface treatment (application of hydrophobic binder). This hydrophobic outer coating layer is provided with a texture, which permits diffusion or penetration of the external liquid medium. The outer coating preferably contains a mixture of hydrophobic substances.

U.S. Patent No. 4,876,097 describes coating of bioactive substance using water insoluble binder, which forms a film over the coat and controls hydrophilicity.

Method of coating granules with hydrogenated vegetable and animal fat along with waxes has been described in U.S. Patent No. 3541204.

Granulation technique has been widely used for coating a bioactive substance. An agitation granulator has been used to coat the particles with waxy substances to give uniform film of desired thickness as described in U.S. patent No. 4948589. In particular, this patent discloses a granular composition for a ruminant containing, as a main component, choline or a physiologically acceptable derivative thereof, wherein the composition is prepared by (i) granulating the choline or its derivative having an average particle size of 100 µm or less, preferably 50 µm or less and a maximum particle size of 150 µm or less, preferably 100 µm or less, an excipient having an average particle size of 10 µm or less and a maximum particle size of 20 µm or less, and a hydrophobic binder under a relative humidity of 10% or less by using an agitation granulator equipped with a stirring means and a chopping means, followed by cooling, separating and classifying the resultant granules to obtain spherical granules having a particle size of 0.5 to 2.5 mm, preferably 0.7 to 2.3 mm and (ii) forming a thin film on the surface of the granules at a temperature of at least 5.degree. C. less than a melting point of the binder, and 5 to 25.degree. C. less than a melting point of the hydrophobic overcoating agent under a relative humidity of 30% or less in an agitation granulator at least equipped with a stirring means, by adding 20 to 40 parts by weight, based on 100 parts by weight of the granules, of a heated molten mixture of a hydrophobic overcoating agent and a solubility modifier in the form of a fine powder in a weight ratio of 1:0.2-1.

Some methods such the one disclosed in U.S. Patent No. 3,619,200 make use of polymers for the coating while others use aliphatic fatty acid to form small pellets as described in U.S. Patent No. 3,959,493

U.S. patent No. 4832967 describes the use of hydrophobic binder to treat the core material and then coating with a basic aminated polymer.

Patent No. USRE 035162 describes the use of methyl cellulose beadlets, which is placed in a rotating mill over which bioactive substance is coated to form the core. This core is further spray coated with the coating material.

Some inventions have used density modifiers in the coating medium and sprayed surfactants at the end of coating process in U.S. Patent No. 6,013,286. This patent for the first time recognises that even coatings that can survive the environment of the rumen face a problem in that the coated granules tend to float on the contents of the rumen which could result in the regurgitation thereof. Regurgitation increases the likelihood that the coating will be compromised or destroyed during rumination.

One of solutions tried was to adjust the density of the capsule or granule by addition of a high density wetting agent, to ensure that the granule sinks. However, the increase in density could cause the capsule to sink to the floor of the rumen and remain there indefinitely. Prior art teaches adjustment of density in the range of 0.8 to 2.0, preferably about 1.0 to 1.4, g/cc.

However, the prior art still did not recognize that particles coated with hydrophobic material will float on water (and on rumen), even though the particles have been densified to a specific gravity greater than that of water (or rumen). Rather, the art teaches that densification alone provides the proper particle/fluid interaction and precludes undersirable flotation of particles.

In an attempt to solve the aforesaid problem, U.S. Patent No. 6,013,286 is directed to a composition of matter comprising particles suitable for introduction of a bioactive substance to the post-rumen portion of the digestive system of a ruminant substantially without introducing said substance to the rumen portion of the digestive system. The particles have a specific gravity between about 0.3 and 2.0, preferably between about 1.0 and 2.0. The particles comprise a core comprising bioactive substance; a hydrophobic coating essentially completely encapsulating said core in a quantity sufficient to essentially preclude introduction of bioactive substance into the rumen; and a surfactant applied to the surface of the hydrophobic coating in a quantity sufficient to ensure that said particles do not float on the rumen.

Another rumen bypass choline composition having a dried core is disclosed in WO 96/08168.

In spite of a large number of teachings, the prior art processes still suffer from several drawbacks. Firstly, choline chloride is highly hydrophilic and tends to absorb a large amount of moisture. As a result, even a microscopic crack in the encapsulation would cause Choline chloride to leak. Secondly, encapsulated particles tend to float while increasing the density of the particles could cause it to sink to the bottom of the rumen. Addition of surfactants could to some extent solve the problem of sinking but continued ingestion of surfactant may not be desirable in the long run.

Spray dried particles have again solved the prior art problems to a large extent but the tremendous costs associated with spray drying processes render such processes highly uneconomical. Furthermore, spray dried particles tend to have a particle diameter of nearly 1 cm which is of unacceptable size. Also agglomeration of particles of such large size could result in a agglomerate of undesirable mass and size that it may impede the smooth passage thereof from the rumen to abomasum.

Accordingly, there is an urgent need for a commercially viable process for the preparation of a composition for ruminants, which would avoid the drawbacks of the prior art processes.

### Objects of the invention

It is therefore, a principal object of the present invention to provide a commercially viable and inexpensive process for the preparation of a choline chloride composition for ruminants, which would avoid the drawbacks of the prior art processes.

It is another object of the present invention to provide process for the preparation of a rumen bypass choline chloride composition in the form of beadlets which will get solubilised and absorbed only in the abomasum or further down and not in the rumen.

It is yet another object of the present invention to provide process for the preparation of a rumen bypass choline chloride composition in the form of beadlets which will not sink to the bottom of the rumen or be retained in the rumen for longer period than necessary.

It is still another object of the present invention to provide process for the preparation of a rumen bypass choline chloride composition in the form of beadlets of acceptable particle size.

It is another object of the present invention to provide process for the preparation of a rumen bypass choline chloride composition in the form of beadlets, which is easy to perform, inexpensive and provides uniform sized individually coated granules.

### Summary of invention

The above and other objects of the present invention are achieved by providing a composition in the form of beadlets for ruminants so as to pass through the rumen portion of the digestive system unaltered and reach the abomasum. It is made possible by a carefully selected choice of conditions and parameters. Thus, the present invention describes a method for encapsulating completely aqueous choline chloride in the form of beadlets wherein the core consists of the bioactive substance and is coated with a hydrophobic material and adjuvant by means of dropping in cold air chamber to obtain beadlets of about 2 to 8 mm size which are stable in the ruminal fluid of ruminant. The coating material has a melting range between 40 to 90° C. The invention uses saturated aqueous choline chloride as the starting material which ensures that the choline chloride remains as the innermost core. It also ensures that unnecessary absorption of moisture, cracking of encapsulation and premature release of choline chloride are all avoided.

Accordingly, the present invention provides a rumen bypass composition containing a bioactive substance, said composition being capable of releasing said bioactive substance into the post rumen portion of the digestive system of a ruminant without introducing said bioactive substance into the rumen of the digestive system, said composition being in the form of beadlets and comprising of:
a. a core consisting of aqueous chloline chloride.
b. a hydrophobic coating material, which completely encapsulates the core to avoid interaction within the rumen of a ruminant.
c. an adjuvant hydrophobic in nature having a melting range of 50-80°C added to the coating material to improve thermal resistance wherein said beadlets have a size of about 2 to 8 mm, the amount of said aqueous choline chloride being in the range of 30 to 60% of the weight of the beadlet, the amount of said coating material is in the range of from 40 to 80% by weight and the amount of said adjuvant being in the range of from 5 to 50% based on the weight of said coating material.

### Detailed description of the invention:

The present invention provides a method of preparation of aqueous choline chloride for ruminant animals by encapsulation of the said substance completely to render it stable in the ruminal fluid and disintegrate on reaching the abomasum. The aqueous choline chloride, may vary from 30 to 60% based on the weight of the encapsulate. It is preferably used in the range of 30 to 40% based on the weight of the encapsulate.

The coating materials usable in the present invention should be hydrophobic in nature and insoluble in acidic medium but soluble in alkaline medium with melting range of 40 to 90°C. The coating material in the composition may range from 40 to 80% of the weight of the encapsulate, preferably between 50 to 70%. The material usable may be a hydrogenated vegetable oil chosen from the group consisting of hydrogenated palm oil, hydrogenated castor oil, hydrogenated sunflower oil, hydrogenated peanut oil, hydrogenated cotton seed oil, hydrogenated soyabean oil and mixtures thereof.

The adjuvant usable in the present invention should be hydrophobic in nature and insoluble in acidic medium but soluble in alkaline medium with a melting range of 50 to 80° C. The adjuvant in the composition may range from 5 to 50% based on the weight of the coating material The adjuvant serves to increase the melting point of the composition and improve firmness of the beadlets so as to resist thermal deformation. The adjuvant usable may be selected from the group consisting of baker's fat, bees wax, carnauba wax, emulsifying wax, hard paraffin, tristearales, kaolin, propylene glycol and mixtures thereof.

The method of encapsulation of the present invention is critical. The choline chloride is mixed with the coating material and adjuvant by heating and constantly stirred at about 150-200 rpm. The temperature ranges between 55 to 80°C. Drops of this molten mass are dropped from a suitable height, through precooled air over a cold surface kept at about 5 to 20°C.

Thus, the present invention also provides a method for the preparation of a rumen bypass composition containing a bioactive substance capable of releasing said bioactive substance into the post rumen portion of the digestive system of a ruminant without introducing into the rumen of the digestive system, said composition being in the form of beadlets, said method comprising of mixing aqueous chloline chloride with a coating material, heating the mixture under constant stirring at a temperature in the range of 55 to 80°C preferably in the range of 65 to 75°C to produce a molten mass, allowing drops of said molten mass to fall from a height through precooled air over a cold surface to obtain said composition in the form of beadlets.

The present invention also provides a method of delivering aqueous choline chloride to ruminants. The choline cliloride used here is aqueous choline chloride solution having about 85% choline chloride content. Thus, the present invention involves method of incorporating aqueous choline chloride as the core material of the beadlets, which is of critical importance. The size of the beadlets ranges from about 2 to 8mm, preferably about 2 to 3 mm.

The present invention will now be described in greater details with reference to the following examples in which examples 10 and 11 are examples according to the invention. It must be understood that the examples are intended only for illustrating the invention.

### Example 1 (not according to the invention)

35 g of choline chloride 85 percent solution was mixed into a molten mixture of hydrophobic coating material containing hydrogenated palm oil about 60g and glyceryl tristearate about 5g with constant stirring at about 150 rpm. The temperature of the mixture was maintained between 65 to 75°C and droplets dropped through cold air on a cold surface carefully which hardened to form beadlets. The size of beadlets ranged between 2 to 3mm. The release in simulated ruminal fluid was observed to be about 18% in two hours.

### Example 2 (not according to the invention)

30gm of pure choline chloride crystals were suspended into 30gm molten mixture of hydrogenated vegetable oils, 30gm glyceryl tristearate and 10gm propylene glycol and stirred well. Droplets were dropped through cold air on a cold surface in a similar manner as in Example -1. Resultant beadlets ranged in size 2 to 3mm.

### Example 3 (not according to the invention)

30gm of pure choline chloride crystals were suspending into 20 gm molten mixture of hydrogenated vegetable oils. 20gm glyceryl tristearate, 20gm bees wax, and 10gm propylene glycol and stirred well. Droplets were dropped through cold air in a similar manner as in Example-1. Resultant beadlets ranged in size 3 to 5mm.

### Example 4 (not according to the invention)

29 gm choline chloride crystals were dissolved in alcohol and then added to 26gm molten mixture of glyceryl tristearate and 45gm carnauba wax and stirred well. Droplets were dropped through cold air in a similar manner as in Example -1. Resultant beadlets ranged in size 2 to 3mm. The release in simulated ruminal fluid was observed to be about 28% in two hours.

### Example 5 (not according to the invention)

32gm choline chloride crystals were dissolved in alcohol and then added to 22gm molten mixture of Hydrogenated vegetable oils, 22gm glyceryl tristearate and 22gm Carnauba wax and stirred well. Droplets were dropped through cold air in a similar manner as in Example -1. Beadlets of 2 to 3mm size were produced. The release in simulated ruminal fluid was observed to be about 26.5% in two hours.

### Example 6 (not according to the invention)

34gm choline chloride crystals were dissolved in alcohol and then added to 22gm molten mixture of hydrogenated vegetable oils, 22gm Glyceryl tristearate and 22gm Carnauba wax and stirred well. Droplets were dropped in cold air in a similar manner as in Example -1. Beadlets of 2 to 3mm size were produced.

### Example 7 (not according to the invention)

50gm of Choline Chloride Dry on cereal carrier was mixed with 46gm molten mixture of hydrogenated palm oil and 4gm glyceryl tristearate and stirred will. Droplets were dropped through cold air in a similar manner as in Example -1. Beadlets of 3 to 6mm size were produced.

### Example 8 (not according to the invention)

32.7 gm of choline chloride crystals were dissolved in a alcohol and then added to 22.1 gm molten mixture of hydrogenated vegetable oils, 22.1gm glyceryl tristearate and 22.1 gm carnauba wax and stirred well. Droplets were dropped through cold air in a similar manner as in Example -1. Beadlets of 2 to 3mm size were produced.

The release in simulated ruminal fluid was observed to be about 27.8% in two hours.

### Example 9 (not according to the invention)

33.3gm of choline chloride crystals were dissolve in a alcohol and then added to 22.4gm molten mixture of hydrogenated vegetable oils, 33.3gm glyceryl tristearate and 11.8gm carnauba wax and stirred well. Droplets were dropped through cold air in a similar manner as in Example-1. Resultant beadlets ranged in size 2 to 4mm. The release in simulated ruminal fluid was observed to be about 13.14% in two hours.

### Example 10

140 gm aqueous choline chloride 85% was added to molten mixture of 20.8 glyceryl tristearate, 235.5 gm of hydrogenated vegetable oil and 2.0 gm of Span-80 and stirred well. Droplets were dropped through cold air in a similar manner as in example 1. Resultant beadlets ranged in size 2 to 4 mm.

### Example 11

140.0 gm of aqueous choline chloride 85% was added to molten mixture of 20.8 glyceryl tristearate, 235.5 gm of hydrogenated vegetable oil and 2.4 gm of Bentonite and stirred well. Droplets were dropped through cold air in a similar manner as in example 1. Resultant beadlets ranged in size 2 to 4 mm.

## Claims

1. A rumen bypass composition containing a bioactive substance said composition being capable of releasing said bioactive substance into the post rumen portion of the digestive system of a ruminant without introducing said bioactive substance into the rumen of the digestive system, said composition being in the form of beadlets and comprising of :
a. a core consisting of aqueous choline chloride.
b. a hydrophobic coating material, which completely encapsulates the core to avoid interaction within the rumen of a ruminant.
c. an adjuvant hydrophobic in nature having a melting range of 50-80° C added to the coating material to improve thermal resistance, and
d. a suspending agent selected from Span -80 (Sorbitan monooleate) and Bentonite;
wherein said beadlets have a size of about 2 to 8 mm, the amount of said aqueous choline chloride being in the range of 30 to 60% of the weight of the beadlet, the amount of said coating material is in the range of from 40 to 80% by weight, the amount of said adjuvant being in the range of from 5 to 50% based on the weight of said coating material and amount of said suspending agent being in the range of 0.15% to 1% by weight of said composition

2. A composition as claimed in claim 1, wherein the hydrophobic coating material is hydrogenated vegetable oil.

3. A composition as claimed in claim 2, wherein the hydrogenated vegetable oil is selected from the group consisting of one or more of hydrogenated palm oil, hydrogenated castor oil, hydrogenated sunflower oil, hydrogenated peanut oil, hydrogenated cotton seed oil, hydrogenated soyabean oil, and mixtures thereof.

4. A composition as claimed in any preceding claim wherein said adjuvant is selected from the group consisting of one or more of beeswax, carnauba wax, emulsifying wax, baker's fat, hard paraffin, tristearates, Kaolin, propylene glycol, and mixture thereof.

5. A composition as claimed in claim 4, wherein the adjuvant is a tristearate.

6. A composition as claimed in any preceding claim, wherein the beadlets are about 3mm in size.

7. A method for the preparation of a rumen bypass composition containing a bioactive substance capable of releasing said bioactive substance into the post rumen portion of the digestive system of a ruminant without introducing said bioactive substance into the rumen of the digestive system, said composition being in the form of beadlets, said method comprising of mixing aqueous chloline chloride with a coating material, heading the mixture under constant stirring at a temperature in the range of 55 to 80°C to produce a molten mass, allowing drops of said molten mass to fall from a height through precooled air over a cold surface to obtain said composition in the form of beadlets, said beadlets consisting of
a. a core consisting of aqueous choline chloride.
b. hydrophobic coating material, which completely encapsulates the core to avoid interaction within the rumen of a ruminant.
c. an adjuvant hydrophobic in nature having a melting range of 50-80° C added to the coating material to improve thermal resistance, and
d. a suspending agent selected from Span -80 (Sorbitan monooleate) and Bentonite;
wherein said beadlets have a size of about 2 to 8 mm, the amount of said aqueous choline chloride being in the range of 30 to 60% of the weight of the beadlet, the amount of said coating material is in the range of from 40 to 80% by weight, the amount of said adjuvant being in the range of from 5 to 50% based on the weight of said coating material and amount of said suspending agent being in the range of 0.15% to 1% by weight of said composition.

8. A method as claimed in claim 7, wherein said stirring is carried out at a temperature in the range of 60 to 75°C.

9. A method as claimed in claim 7 or 8, wherein said stirring is carried out at about 150 to 200 rpm.

10. A method as claimed in claim 7 or claim 8, wherein said precooled air and cold surface is maintained at a temperature of from 5 to 20°C.

11. A method as claimed in any of claims 7 to 10, wherein the hydrophobic coating material is hydrogenated vegetable oil.

12. A method as claimed in claim 11, wherein the hydrogenated vegetable oil is selected from the group consisting of one or more of hydrogenated palm oil, hydrogenated castor oil, hydrogenated sunflower oil, hydrogenated peanut oil, hydrogenated cotton seed oil, hydrogenated soyabean oil, and mixtures thereof.

13. A method as claimed in any of claims 7 to 12, wherein prior to said heating an adjuvant is mixed with said coating material.

14. A method as claimed in claim 12 wherein said adj uvant is selected from the group consisting of one or more of beeswax, carnauba wax, emulsifying wax, baker's fat, hard paraffin, tristearates, kaolin, propylene glycol and mixtures thereof.

15. A method as claimed in any of claims 7 to 14, wherein the beadlets arc 2-8 mm in size.

16. The use of a composition in the manufacture of an oral feed for a ruminant for introducing a bioactive substance to the post-rumen portion of the digestive system of the ruminant, the composition being in the form of beadlets and comprising:
a. a core consisting of aqueous choline chloride.
b. a hydrophobic coating material coating said choline chloride which completely encapsulates the core to avoid interaction within the rumen of the ruminant.
b. an adjuvant hydrophobic in nature having a melting range of 50-80°C added to the coating material to improve thermal resistance, and
c. a suspending agent selected from Span-80 (Sorbitan monooleate) and Bentonite;
wherein said beadlets have a size of about 2 to 8 mm, the amount of said aqueous choline chloride being in the range of 30 to 60% of the weight of the beadlet, the amount of said coating material is in the range of from 40 to 80% by weight, the amount of said adjuvant being in the range of from 5 to 50% based on the weight of said coating material and amount of said suspending agent being in the range of 0.15% to 1% by weight of said composition.

## Patentansprüche

1. Pansenumgehende Zusammensetzung, die eine bioaktive Substanz enthält, wobei die Zusammensetzung zur Aussetzung der bioaktiven Substanz in den Abschnitt hinter dem Pansen des Verdauungssystems eines Wiederkäuers fähig ist, ohne die bioaktive Substanz in den Pansen des Verdauungssystems einzuführen, wobei die Zusammensetzung in der Form von Kügelchen vorliegt und Folgendes umfasst:
a. einen Kern, der aus wässrigem Cholinchlorid besteht;
b. ein hydrophobes Beschichtungsmaterial, das den Kern vollständig verkapselt, um eine Wechselwirkung mit dem Pansen eines Wiederkäuers zu vermeiden;
c. ein von der Art her hydrophobes Adjuvans mit einem Schmelzbereich von 50-80°C, das dem Beschichtungsmaterial zugegeben wird, um die Wärmeresistenz zu verbessern; und
d. ein Suspensionsmittel, das aus Span-80, Sorbitanmonooleat und Bentonit ausgewählt ist;
wobei die Kügelchen eine Größe von etwa 2 bis 8 mm haben, die Menge das wässrigen Cholinchlorids im Bereich von 30 bis 60 % des Gewichts des Kügelchens ist, die Menge des Beschichtungsmaterials im Bereich von 40 bis 80 Gew.-% ist, die Menge das Adjuvans im Bereich von 5 bis 50 % des Gewichts des Beschichtungsmaterials ist und die Menge des Suspensionsmittels im Bereich von 0,15 % bis 1 % des Gewichts der Zusammensetzung ist.

2. Zusammensetzung nach Anspruch 1, wobei das hydrophobe Beschichtungsmaterial hydrogeniertes Pflanzenöl ist.

3. Zusammensetzung nach Anspruch 2, wobei das hydrogenierte Pflanzenöl aus der Gruppe ausgewählt ist, die aus einem oder mehreren von hydrogeniertem Palmöl, hydrogeniertem Rizinusöl, hydrogeniertem Sonnenblumenöl, hydrogeniertem Erdnussöl, hydrogeniertem Baumwollsaatöl, hydrogeniertem Sojabohnenöl und Mischungen davon besteht.

4. Zusammensetzung nach einem der vorhergehenden Ansprüche, wobei das Adjuvans aus der Gruppe ausgewählt ist, die aus einem oder mehreren von Bienenwachs, Carnauba-Wachs, emulgierendem Wachs, Backfett, hartem Paraffin, Tristearaten, Kaolin, Propylenglykol und Mischungen davon besteht.

5. Zusammensetzung nach Anspruch 4, wobei das Adjuvans ein Tristearat ist.

6. Zusammensetzung nach einem der vorhergehenden Ansprüche, wobei die Kügelchen eine Größe von etwa 3 mm aufweisen.

7. Verfahren zum Herstellen einer pansenumgehenden Zusammensetzung, die eine bioaktive Substanz enthält und zur Freisetzung der bioaktiven Substanz in den Abschnitt hinter dem Pansen des Verdauungssystems eines Wiederkäuers fähig ist, ohne die bioaktive Substanz in den Pansen des Verdauungssystems einzuführen, wobei die Zusammensetzung in der Form von Kügelchen vorliegt, wobei das Verfahren das Mischen von wässrigem Cholinchlorid mit einem Beschichtungsmaterial, Erhitzen der Mischung unter konstantem Rühren bei einer Temperatur im Bereich von 55 bis 80°C, um eine geschmolzene Masse hervorzubringen, Fallenlassen von Tropfen der geschmolzenen Masse aus einer Höhe durch vorgekühlte Luft über eine kalte Fläche, um die Zusammensetzung in der Form von Kügelchen zu erhalten, umfasst, wobei die Kügelchen aus Folgendem bestehen:
a. einem Kern, der aus wässrigem Cholinchlorid besteht;
b. einem hydrophoben Beschichtungsmaterial, das den Kern vollständig verkapselt, um die Wechselwirkung mit dem Pansen eines Wiederkäuers zu vermeiden;
c. einem von der Art her hydrophoben Adjuvans mit einem Schmelzbereich von 50-80°C, das dem Beschichtungsmaterial zugegeben wird, um die Wärmeresistenz zu verbessern; und
d. einem Suspensionsmittel, das aus Span-80, Sorbitanmonooleat und Bentonit ausgewählt ist;
wobei die Kügelchen eine Größe von etwa 2 bis 8 mm haben, die Menge das wässrigen Cholinchlorids im Bereich von 30 bis 60 % des Gewichts des Kügelchens ist, die Menge des Beschichtungsmaterials im Bereich von 40 bis 80 Gew.-% ist, die Menge das Adjuvans im Bereich von 5 bis 50 % des Gewichts des Beschichtungsmaterials ist und die Menge des Suspensionsmittels im Bereich von 0,15 % bis 1 % des Gewichts der Zusammensetzung ist.

8. Verfahren nach Anspruch 7, wobei das Rühren bei einer Temperatur im Bereich von 60 bis 75°C durchgeführt wird.

9. Verfahren nach Anspruch 7 oder 8, wobei das Rühren bei etwa 150 bis 200 Umdrehungen pro Minute durchgeführt wird.

10. Verfahren nach Anspruch 7 oder Anspruch 8, wobei die vorgekühlte Luft und die kalte Fläche bei einer Temperatur von 5 bis 20°C gehalten werden.

11. Verfahren nach einem der Ansprüche 7 bis 10, wobei das hydrophobe Beschichtungsmaterial hydrogeniertes Pflanzenöl ist.

12. Verfahren nach Anspruch 11, wobei das hydrogenierte Pflanzenöl aus der Gruppe ausgewählt ist, die aus einem oder mehreren von hydrogeniertem Palmöl, hydrogeniertem Rizinusöl, hydrogeniertem Sonnenblumenöl, hydrogeniertem Erdnussöl, hydrogeniertem Baumwollsaatöl, hydrogeniertem Sojabohnenöl und Mischungen davon besteht.

13. Verfahren nach einem der Ansprüche 7 bis 12, wobei vor dem Erhitzen ein Adjuvans mit dem Beschichtungsmaterial gemischt wird.

14. Verfahren nach Anspruch 12, wobei das Adjuvans aus der Gruppe ausgewählt ist, die aus einem oder mehreren von Bienenwachs, Carnauba-Wachs, emulgierendem Wachs, Backfett, hartem Paraffin, Tristearaten, Kaolin, Propylenglykol und Mischungen davon besteht.

15. Verfahren nach einem der Ansprüche 7 bis 14, wobei die Kügelchen eine Größe von etwa 2-8 mm haben.

16. Verwendung einer Zusammensetzung bei der Herstellung eines oralen Futters für einen Wiederkäuer zum Einführen einer bioaktiven Substanz in den Abschnitt hinter dem Pansen des Verdauungssystems des Wiederkäuers, wobei die Zusammensetzung in Form von Kügelchen vorliegt und Folgendes umfasst:
a. einen Kern, der aus wässrigem Cholinchlorid besteht;
b. ein hydrophobes Beschichtungsmaterial, das den Kern vollständig verkapselt, um die Wechselwirkung mit dem Pansen des Wiederkäuers zu vermeiden;
c. ein von der Art her hydrophobes Adjuvans mit einem Schmelzbereich von 50-80°C, das dem Beschichtungsmaterial zugegeben wird, um die Wärmeresistenz zu verbessern; und
d. ein Suspensionsmittel, das aus Span-80, Sorbitanmonooleat und Bentonit ausgewählt ist;
wobei die Kügelchen eine Größe von etwa 2 bis 8 mm haben, die Menge das wässrigen Cholinchlorids im Bereich von 30 bis 60 % des Gewichts des Kügelchens ist, die Menge des Beschichtungsmaterials im Bereich von 40 bis 80 Gew.-% ist, die Menge das Adjuvans im Bereich von 5 bis 50 % des Gewichts des Beschichtungsmaterials ist und die Menge des Suspensionsmittels im Bereich von 0,15 % bis 1 % des Gewichts der Zusammensetzung ist.

## Revendications

1. Composition de contournement de rumen contenant une substance bioactive, ladite composition étant capable de libérer ladite substance bioactive dans la partie post-rumen du système digestif d'un ruminant, sans introduction de ladite substance bioactive dans le rumen du système digestif, ladite composition étant sous la forme de petites perles, et comprenant :
a. un coeur constitué de chlorure de choline aqueux ;
b. une matière d'enrobage hydrophobe, qui renferme complètement le coeur pour éviter une interaction dans le rumen d'un ruminant ;
c. un adjuvant hydrophobe par nature ayant une plage de fusion de 50 à 80°C, ajouté à la matière d'enrobage pour améliorer la résistance thermique, et
d. un agent de suspension choisi entre Span-80 et Bentonite (noms commerciaux déposés) ;
dans laquelle lesdites petites perles ont une dimension d'environ 2 à 8 mm, la quantité dudit chlorure de choline aqueux étant dans la plage de 30 à 60 % du poids de la petite perle, la quantité de ladite matière d'enrobage est dans la plage de 40 à 80 % en poids, la quantité dudit adjuvant étant dans la plage de 5 à 50 % sur la base du poids de ladite matière d'enrobage, et la quantité dudit agent de suspension étant dans la plage de 0,15 % à 1 % en poids de ladite composition.

2. Composition selon la revendication 1, dans laquelle la matière d'enrobage hydrophobe est une huile végétale hydrogénée.

3. Composition selon la revendication 2, dans laquelle l'huile végétale hydrogénée est sélectionnée dans le groupe comportant une ou plusieurs huiles parmi l'huile de palme hydrogénée, l'huile de ricin hydrogénée, l'huile de tournesol hydrogénée, l'huile d'arachide hydrogénée, l'huile de coton hydrogénée, l'huile de soja hydrogénée et des mélanges de celles-ci.

4. Composition selon l'une quelconque des revendications précédentes, dans laquelle ledit adjuvant est sélectionné dans le groupe comportant un ou plusieurs adjuvants parmi la cire d'abeille, la cire de carnauba, une cire émulsifiante, la graisse des boulangers, la paraffine dure, des tristéarates, le Kaolin, le propylèneglycol et des mélanges de ceux-ci.

5. Composition selon la revendication 4, dans laquelle l'adjuvant est un tristéarate.

6. Composition selon l'une quelconque des revendications précédentes, dans laquelle les petites perles ont une dimension d'environ 3 mm.

7. Procédé pour la préparation d'une composition de contournement de rumen contenant une substance bioactive, capable de libérer ladite substance bioactive dans la partie post-rumen du système digestif d'un ruminant sans introduction de ladite substance bioactive dans le rumen du système digestif, ladite composition étant sous la forme de petites perles, ledit procédé comprenant les étapes consistant à mélanger le chlorure de choline aqueux avec une matière d'enrobage, à chauffer le mélange sous agitation constante à une température dans la plage de 55 à 80°C pour produire une masse fondue, à laisser tomber des gouttes de ladite masse fondue à partir d'une hauteur à travers un air pré-refroidi sur une surface froide pour obtenir ladite composition sous la forme de petites perles, lesdites petites perles étant constituées
a. d'un coeur constitué de chlorure de choline aqueux ;
b. d'une matière d'enrobage hydrophobe, qui renferme complètement le coeur pour éviter une interaction dans le rumen d'un ruminant ;
c. d'un adjuvant hydrophobe par nature ayant une plage de fusion de 50 à 80°C, ajouté à la matière d'enrobage pour améliorer la résistance thermique, et
d. d'un agent de suspension choisi entre Span-80 et Bentonite (noms commerciaux déposés) ;
dans laquelle lesdites petites perles ont une dimension d'environ 2 à 8 mm, la quantité dudit chlorure de choline aqueux étant dans la plage de 30 à 60 % du poids de la petite perle, la quantité de ladite matière d'enrobage est dans la plage de 40 à 80 % en poids, la quantité dudit adjuvant étant dans la plage de 5 à 50 % sur la base du poids de ladite matière d'enrobage, et la quantité dudit agent de suspension étant dans la plage de 0,15 % à 1 % en poids de ladite composition.

8. Procédé selon la revendication 7, dans lequel ladite agitation est effectuée à une température dans la plage de 60 à 75°C.

9. Procédé selon la revendication 7 ou 8, dans lequel ladite agitation est effectuée d'environ 150 à environ 200 tpm.

10. Procédé selon la revendication 7 ou 8, dans lequel ledit air pré-refroidi et ladite surface froide sont maintenus à une température de 5 à 20°C.

11. Procédé selon l'une quelconque des revendications 7 à 10, dans lequel la matière d'enrobage hydrophobe est une huile végétale hydrogénée.

12. Procédé selon la revendication 11, dans lequel l'huile végétale hydrogénée est sélectionnée dans le groupe comportant une ou plusieurs huiles parmi l'huile de palme hydrogénée, l'huile de ricin hydrogénée, l'huile de tournesol hydrogénée, l'huile d'arachide hydrogénée, l'huile de coton hydrogénée, l'huile de soja hydrogénée et des mélanges de celles-ci.

13. Procédé selon l'une quelconque des revendications 7 à 12, dans lequel avant ledit chauffage, un adjuvant est mélangé avec ladite matière d'enrobage.

14. Procédé selon la revendication 12, dans lequel ledit adjuvant est sélectionné dans le groupe comportant un ou plusieurs adjuvants parmi la cire d'abeille, la cire de carnauba, une cire émulsifiante, la graisse des boulangers, la paraffine dure, des tristéarates, le Kaolin, le propylèneglycol et des mélanges de ceux-ci.

15. Procédé selon l'une quelconque des revendications 7 à 14, dans lequel les petites perles ont une dimension de 2 à 8 mm.

16. Utilisation d'une composition dans la fabrication d'un aliment oral destiné à un ruminant afin d'introduire une substance bioactive dans la partie post-rumen du système digestif du ruminant, la composition étant sous la forme de petites perles, et comprenant :
a. un coeur constitué de chlorure de choline aqueux ;
b. une matière d'enrobage hydrophobe enrobant ledit chlorure de choline, qui renferme complètement le coeur pour éviter une interaction dans le rumen du ruminant ;
c. un adjuvant hydrophobe par nature ayant une plage de fusion de 50 à 80°C, ajouté à la matière d'enrobage pour améliorer la résistance thermique, et
d. un agent de suspension choisi entre Span-80 et Bentonite (noms commerciaux déposés) ;
dans laquelle lesdites petites perles ont une dimension d'environ 2 à 8 mm, la quantité dudit chlorure de choline aqueux étant dans la plage de 30 à 60 % du poids de la petite perle, la quantité de ladite matière d'enrobage est dans la plage de 40 à 80 % en poids, la quantité dudit adjuvant étant dans la plage de 5 à 50 % sur la base du poids de ladite matière d'enrobage, et la quantité dudit agent de suspension étant dans la plage de 0,15 % à 1 % en poids de ladite composition.
